# EUROPEAN PATENT APPLICATION

(11) **EP 4 528 503 A1**
(43) Date of publication of application: **26.03.2025**
(21) Application number: 23199453.4
(22) Date of filing: 25.09.2023
(51) Int. Cl.: G06F 9/48, G06F 11/07, G06F 11/34

(54) **NON-INVASIVE PROGRESS-AWARENESS FOR REAL-TIME TASKS**

(71) Applicant: Rockwell Collins, Inc., Cedar Rapids, IA 52498 (US)
(72) Inventor: Garcia Gerner, Alejandro, Cork City T12 FA49 (IE); Skalistis, Stefanos, Cork City T23 V3FK (IE); Mora De Sambricio, Javier, Cork City T12 X2TN (IE); Wiese, Hubertus, Coachford P12 YH99, Co. Cork (IE)
(74) Representative: Dehns

(57) **Abstract**

There is provided a computer implemented method for detecting timing faults during execution of a task having an estimated worst case execution time, WCET. The method comprises: in response to a monitoring interrupt occurring, determining the progress of the task at the interrupt and the executed time of the task up until the interrupt, determining the remaining worst case execution time, rWCET, for the task to finish its execution from the progress of the task at the point of interrupt, and if the sum of the rWCET and the run time of the task exceed the estimated WCET of the task, then detecting that a timing fault will occur.

## Description

### FIELD

This invention relates generally to the field of progress-awareness techniques for task execution monitoring.

### BACKGROUND

In real-time embedded systems, software tasks may be assigned a Worst-Case Execution Time (WCET) value, using static analyzers and/or measurement approaches. These WCETs may then be used to schedule the tasks so as to ensure that they complete execution before their respective deadlines. Particularly in safety critical applications, is it important to ensure that tasks are executed before their deadline, as it is crucial for the correct behaviour of the embedded systems.

However, there are several reasons that the calculated WCET values may be exceeded, albeit with small probability or frequency. However, simply inflating the WCET values so as to provide a larger time buffer undermines the system performance and increases size, weight and power requirements of the overall system, as more hardware would be required to execute the same amount of processing work/tasks.

Tasks may take longer than its inferred or estimated WCET value due to several reasons. For example, hardware can be very complex, and therefore certain timing attributes may not be predictable or cannot be accurately modelled. Furthermore, modern multi-processor hardware suffers from resource contention, when two or more Processing Elements (PE) access simultaneously the same resources, which in turn causes hard-to-predict timing variations on the task execution (i.e. timing interference). Additionally or alternatively, measurement-based WCETs may not have captured the actual worst case. Finally, commercial-off-the-shelf (COTS) hardware vendors do not disclose the full timing behaviour of their products, and certain hardware elements may be hidden in their documentation in order to protect the IP of the vendor. Overrunning the WCET that has been used for timing purposes can constitute a timing fault for the system.

Detection of a timing fault, i.e. detecting when a task overruns its WCET value, is typically done by one of two different methods. The most common method utilizes a hardware timer, and allows the task to execute for its full WCET and checks if the task has finished or not at the end of the execution. However, this method only allows for the detection of a timing fault after the WCET has elapsed, thus restricting the options to employ masking techniques.

Alternative methods use timing information of the task that is acquired through the process of WCET estimation, and inserts checkpoints during the task execution. At these checkpoints, it is checked whether the task has executed for more time than the estimated/measured time, and a signal for an imminent timing fault is raised if that time has been exceeded. Such a method therefore allows for masking or mitigation strategies to be employed pre-emptively (i.e. before the WCET is actually exceeded).

However, such a method requires the insertion of checkpoints in the source or binary code of the tasks of the systems. Whilst such a process can be automated, selecting where the checkpoints should be placed so that they are effective is far from straightforward. For legacy systems, inserting checkpoints is usually not possible. In addition, inserting checkpoints alters the timing behaviour of the task, and as such the utilized WCET estimation method has to be reapplied for all the modified tasks. Finally, these checkpoints are static, i.e. they cannot be changed, and if some checkpoints need to be inserted, moved or removed, then the WCET process has to be reapplied again for each modification.

It would therefore be beneficial simple and robust method for determining WCETs, and pre-empting timing faults during execution of the task.

### SUMMARY

According to a first aspect, there is provided a method for detecting timing faults during execution of a task having an estimated worst case execution time, WCET.

The method comprises: in response to a monitoring interrupt occurring, determining the progress of the task at the interrupt and the executed time of the task up until the interrupt; determining the remaining worst case execution time, rWCET, for the task to finish its execution from the progress of the task at the point of interrupt, and if the sum of the rWCET and the run time of the task exceed the estimated WCET of the task, then detecting that a timing fault will occur.

As such, there is provided a technique that does not require the insertion of checkpoints in order to signal an imminent timing fault, by utilizing the timing information acquired during the WCET estimation of each task, and using a monitoring task at runtime to check whether a monitored task has taken more time to execute any portion of its functionality than was expected. Performing progress-awareness in such a way does not require any modification of the application tasks, and allows the monitoring to be performed at arbitrary points or frequency. As such, it is suitable for legacy systems and any modification of the frequency when such checks are performed does not require the WCET estimation method to be reapplied. In doing so, it is possible to reduce the size, weight and power requirements of the hardware that is executing the tasks, as less redundancy needs to be built in, in order to deal with any tasks exceeding their WCET. Rather, the system can proactively mitigate imminent issues in the execution of the task, in a more efficient manner.

Responsive to detecting that a timing fault will occur, then mitigation strategies may be employed to prevent such a fault from before completion of the task. The mitigation strategies may comprise one or more of: reallocating subsequent tasks, task replication, increasing the WCET for the task, using an alternative schedule, and/or mode-switching of mixed-critical systems. This takes advantage of the ability to detect a timing error in advance, by providing ways in which those timing errors might be dealt with, before they occur.

A hardware timer may be configured to raise the monitoring interrupt. This can be used to indicate when the progress of a task should be checked, and used as a trigger for the interrupt routine to determine the progress of the task (and thus, the rWCET).

The step of determining the rWCET may comprise: obtaining, from a binary file, a rWCET corresponding to the progress of the task at the interrupt. The binary file may comprise at least one trace, each trace comprising a plurality of tuples, each tuple comprising information regarding a program address of a task, a number of CPU registers and the rWCET for the task to complete given the program address and number of CPU registers. The program address of the task at the interrupt and the number of CPU registers at the interrupt may be obtained; and the step of obtaining, from the binary file, a rWCET may comprise: performing a binary search lookup in the trace using the program address and CPU registers of the task at the interrupt, to determine the rWCET corresponding to the progress of the task at the interrupt.

If a tuple having the same program address and CPU registers is not found, then the rWCET from the tuple having the closest address and CPU registers may be selected. This improves robustness of the system, even in the case where the exact address is not found.

The step of determining the rWCET may comprise: traversing a call stack of the task in order to find the correct stack frame corresponding to the task at the interrupt, the call stack comprising at least one of the at least one trace. The step of traversing a stack of the task may comprise: comparing a link pointer value of a performance counter at the interrupt to the start and end address of the stack-frame; and, if the link pointer value is within that range, then identifying the correct stack frame.

The above described method may be considered a run-time phase - i.e. a method that is performed during completion of the tasks. There is also provided a design-time phase, which allows for the gathering of the relevant information so as to calculate the rWCET according to the progress of the tasks. That information may then be used in the run-time phase.

Accordingly, in a second aspect, there is provided a computer implemented method of profiling progress of a task by computing the remaining worst case execution time, rWCET, for the task to finish its execution from at least one program address of the tasks. The method comprises performing a WCET analysis of the task; calculating a rWCET from at least one of the program addresses of the task; and for each of the calculated rWCETs, compiling a tuple comprising information regarding the respective program address of a task, a number of CPU registers and the rWCET for the task to complete given the program address and number of CPU registers; and adding the compiled tuple(s) in a separate section of a binary file of the task.

The WCET analysis may be a measurement based analysis, and the method may comprise; consolidating the tuples by identifying tuples having the same program address and number of CPU registers, selecting the tuple having the smallest execution time, and discarding the remaining tuples.

The WCET analysis may be a static WCET analysis.

As such, the method of the first aspect may utilised tuple(s) compiled by the method of the second aspect.

According to a third aspect, there is provided system comprising a processor system, the processor system being configured to perform the method of the first or the second aspect.

### BRIEF DESCRIPTION OF THE DRAWINGS

Certain examples of the disclosure will now be described, by way of example only, with reference to the accompanying drawings, in which:

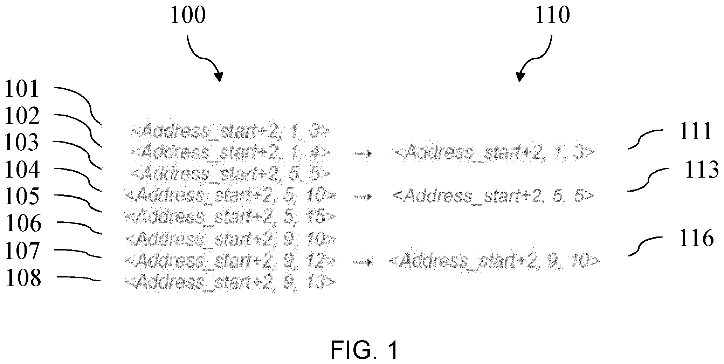

Figure 1 illustrates an example consolidation of tuples.

### DETAILED DESCRIPTION

As would be appreciated, the techniques herein may find use in scheduling tasks on any kind of hardware, for example COTS processors, multi-processor systems, and/or single core processor systems. The term processor system used herein would be understood to refer to any suitable processor system, such as those listed above.

Herein there is provided a non-invasive technique, thereby addressing the shortcomings of existing progress-awareness techniques for task execution monitoring. Said another way, there is provided a technique that does not require the insertion of checkpoints in order to signal an imminent timing fault.

This may be achieved by utilizing the timing information acquired during the WCET estimation of each task, and using a monitoring task at runtime to check whether a monitored task has taken more time to execute any portion of its functionality than was expected. Performing progress-awareness in such a way does not require any modification of the application tasks, and allows the monitoring to be performed at arbitrary points or frequency. As such, it is suitable for legacy systems and any modification of the frequency when such checks are performed does not require the WCET estimation method to be reapplied.

As would be understood, a task is a fragment of a binary file that contains the functionality that we want to be monitored. It is characterized by a start_address and an end_address, which signify the memory locations where its binary instructions reside.

A Program Counter (PC) is the CPU hardware register that indicates the current instruction being executed.

A tuple is an ordered and finite list of elements, such as <Program address, CPU Registers, Time>. A trace is a sequence of tuples.

A progress monitor is a domain specific functionality, implemented as an interrupt service routine, that checks if the progress of the task is late and can potentially cause a timing fault.

In order to provide a monitoring of a task's progress against its expected completion time, timing data is collected throughout the completion of the task during a WCET analysis of the task. Then, throughout the task, a remaining WCET (rWCET) can be estimated depending on how much of the task is left to run. This rWCET can then be utilised to predict whether the completion time of the task will exceed the WCET that had previously been calculated and used for scheduling of the task, and therefore will (or at least, could) result in a timing fault, before the timing fault has actually occurred. When such a determination is made, then the system may take steps to mitigate such issues, for example, by reallocating remaining tasks.

The necessary timing information, including partial WCETs from which the rWCET may be calculated in a design-time phase. Then, the runtime phase may occur, where the execution times of the tasks may be monitored during execution, the task progress may be tracked and compared with the rWCET, and an imminent timing fault may be signalled if necessary.

In order to acquire the necessary timing information (partial WCETs), tasks are analyzed or profiled, and a preprocessing step is performed to calculate the remaining WCET for the instruction addresses of the task.

For example, a WCET analysis of a task may be performed, and timing information of its execution is extracted in the form of trace tuples.

In case of a static WCET analysis (an analysis based on a precisely accurate model of the processor upon which the codes are to be run and all potential sources of timing behaviour interference), a partial WCET tuple, i.e. <*Program address, CPU Registers, rWCET*>*,* may be extracted for all program addresses between the start_address and end_address. In other words, using a static analysis, for each program address, it is possible to compute a remaining rWCET time.

In case of measurement-based approaches (an analysis based on measuring the execution times of tasks on the hardware, and measuring their execution time), the task profiling might not give information for all the program addresses, and the execution time for each address may vary across different executions. Of course, the more information that can be gathered in the task profiling, then the more accurate the approach becomes. If certain addresses are missing, this may be addressed in a "compare task progress with rWCET" step.

After profiling a task, i.e. executing a certain amount of times, a trace is captured in the form of <*Program address, CPU Registers, Time*>*.* For any distinct address there may be multiple tuples having different timing information. These are consolidated, by considering the tuple with the smallest execution time, using the following formula:

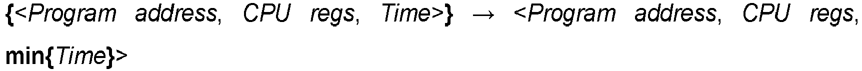

An example consolidation of tuples collected during a measurement based approach may be seen in Figure 1. Trace 100 comprises tuples 101, 102, 103, 104, 105, 106, 107, 108, which comprise multiple tuples having different timing information. For each program address and CPU register, the tuple with the smallest execution time may be selected. This results in a consolidated trace 110, which comprises tuples 111, 113, and 116, which correspond to only tuples 101, 103 and 116 of the original trace 100. These consolidated tuples may then be fed to the "computation of the remaining WCET".

For such measurement-based approaches, once partial WCET tuples have been measured, then the rWCET for each address may be calculated. During this step, the rWCET of each task is computed such that they may be fed to the runtime phase.

For such measurement-based approaches, the computation of rWCET for any task τ consists of getting the WCET for the whole task, i.e. the WCET at the *end_address,* and then subtracting from that value the value from each input tuple, as illustrated in the below formulas:

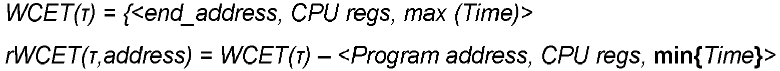

By selecting the tuples with the smallest execution time as described above, it ensures that the rWCET is calculated as conservatively as possible.

Such a computation is not required for static analysis, as (as referred to above) it is possible to directly extract the rWCET information in this form.

The rWCET values for each programme address/CPU registers are then added in a separate section of the binary file to be deployed, called a *time-augmented binary file* having the same timing behaviour as the original file. Whilst this is typically true in most platforms, if the timing behaviour is not the same or it cannot be verified these, values should be passed externally (using standard files, through shared memory, etc).

The result of the above phase is that, for each program address (i.e. at multiple points throughout completion of a task), a "rWCET" is available. The rWCET values can be provided as a separate section of the binary file, such that the function of the code of the task is not changed in any appreciable way - no checkpoints need to be added into the code, but rather the binary file is provided as essentially a separate lookup table that can be consulted in real time, during execution of the task. This allows for the identification of a likely timing fault, i.e. if the execution time plus the rWCET from that point of the task exceeds the originally calculated WCET.

In this way, the above calculated rWCETs may be utilised during a run-time phase.

During boot time, the rWCET values may be loaded into a memory location that is accessible only to the progress monitor.

During boot and at predetermined points, according to the requirements of the mode of operation, a H/W timer may be configured to raise a *monitoring interrupt,* i.e. an interrupt when the progress of a task should be checked.

When a monitoring interrupt occurs (when the timing of the execution of the task is to be checked), the interrupt routine should first determine the progress of the task, and then use that to find the associated rWCET. For example, there may be one call stack per task. Each stack can consist of a number of frames, with each frame containing data related to a subroutine invocation, such as locals, arguments, and the link pointer. The link pointer can store the address of the program counter when the call was made.

Using that address, the interrupt routine may then traverse the stack in order to find the correct stack frame, so that the correct rWCET time may be found. This is particularly important when the interrupt occurs during the execution of some library call from the task. For example, the task may involve computing the sine of a value and the instructions for that computation are not within the *start* and *end address* of the task.

In such a case, the correct stack-frame may be found by comparing the link pointer value (i.e. the value of the PC when a call was made) with the *start* and *end address;* if the link pointer value is within that range then this is the correct stack frame.

Once the correct stack frame has been acquired, the relevant rWCET may be obtained, and compared with the executed time. For example, the runtime trace tuple <*Exec Program address, Exec CPU Registers, ExecTime*> may be acquired. Using the *Program address and CPU Registers,* a binary search look up on the rWCET tuples is performed. If the exact tuple is not found, the tuple with closest address and CPU registers is used, for example, according to the following equation:

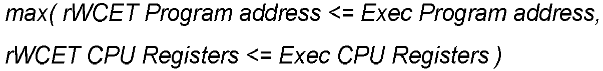

From the acquired tuple, a progress check can be performed. For example, the following progress check may be performed to test if the task can potentially cause a timing fault:

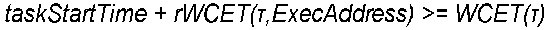

If the above expression is calculated as true (i.e. the task start time added to the rWCET time indicates that the originally calculated WCET time is likely to be exceeded), then a signal may be raised indicating that a timing fault may potentially occur, thus being able to detect a timing fault without having to wait the task to complete its execution. This enables the system to react and employ mitigation strategies to prevent such a fault from occurring without having to wait for the task to complete.

For example, the system may employ masking or mitigating strategies, such as a reallocation of subsequent tasks, task replication, increasing the WCET for the failing task, using an alternative schedule, mode-switching of mixed-critical systems etc.

By providing a system that can more accurately determine WCETs, and also provide for pre-emptive timing fault detection, it is possible to reduce the size, weight and power requirements of the hardware that is executing the tasks, as less redundancy needs to be built in, in order to deal with any tasks exceeding their WCET. Rather, the system can proactively mitigate imminent issues in the execution of the task, in a more efficient manner.

It will be appreciated by those skilled in the art that the disclosure has been illustrated by describing one or more specific examples, but is not limited to these examples; many variations and modifications are possible within the scope of the accompanying claims.

## Claims

1. A computer implemented method for detecting timing faults during execution of a task having an estimated worst case execution time, WCET, the method comprising:
in response to a monitoring interrupt occurring, determining the progress of the task at the interrupt and the executed time of the task up until the interrupt,
determining the remaining worst case execution time, rWCET, for the task to finish its execution from the progress of the task at the point of interrupt, and
if the sum of the rWCET and the run time of the task exceed the estimated WCET of the task, then detecting that a timing fault will occur.

2. The computer implemented method of claim 1, comprising
responsive to detecting that a timing fault will occur, then employing mitigation strategies to prevent such a fault from before completion of the task.

3. The computer implemented method of claim 2, wherein the mitigation strategies comprise one or more of:
reallocating subsequent tasks, task replication, increasing the WCET for the task, using an alternative schedule, and/or mode-switching of mixed-critical systems.

4. The computer implemented method of any preceding claim, comprising configuring a hardware timer to raise the monitoring interrupt.

5. The computer implemented method of any preceding claim, wherein the step of determining the rWCET comprises:
obtaining, from a binary file, a rWCET corresponding to the progress of the task at the interrupt.

6. The computer implemented method of claim 5, wherein the binary file comprises at least one trace, each trace comprising a plurality of tuples, each tuple comprising information regarding a program address of a task, a number of CPU registers and the rWCET for the task to complete given the program address and number of CPU registers.

7. The computer implemented method of claim 6, the method comprising:
obtaining the program address of the task at the interrupt and the number of CPU registers at the interrupt; and wherein the step of obtaining, from the binary file, a rWCET comprises:
performing a binary search lookup in the trace using the program address and CPU registers of the task at the interrupt, to determine the rWCET corresponding to the progress of the task at the interrupt.

8. The computer implemented method of claim 7, wherein, if a tuple having the same program address and CPU registers is not found, then selecting the rWCET from the tuple having the closest address and CPU registers.

9. The computer implemented method of any of claims 6 to 8, wherein the step of determining the rWCET comprises:
traversing a call stack of the task in order to find the correct stack frame corresponding to the task at the interrupt, the call stack comprising at least one of the at least one trace.

10. The computer implemented method of claim 9, wherein the step of traversing a stack of the task comprises:
comparing a link pointer value of a performance counter at the interrupt to the start and end address of the stack-frame; and, if the link pointer value is within that range, then identifying the correct stack frame.

11. A computer implemented method of profiling progress of a task by computing the remaining worst case execution time, rWCET, for the task to finish its execution from at least one program address of the tasks; the method comprising
performing a WCET analysis of the task;
calculating a rWCET from at least one of the program addresses of the task; and
for each of the calculated rWCETs, compiling a tuple comprising information regarding the respective program address of a task, a number of CPU registers and the rWCET for the task to complete given the program address and number of CPU registers; and
adding the compiled tuple(s) in a separate section of a binary file of the task.

12. The computer implemented method of claim 11, wherein the WCET analysis is a measurement based analysis, and wherein the method comprises;
consolidating the tuples by identifying tuples having the same program address and number of CPU registers, selecting the tuple having the smallest execution time, and discarding the remaining tuples.

13. The computer implemented method of claim 11, wherein the WCET analysis is a static WCET analysis.

14. The computer implemented method of any of claims 5 to 10, wherein the tuple(s) are compiled by the method of any of claims 11 to 13.

15. A system comprising a processor system, the processor system being configured to perform the method of any of claims 1 to 14.
